# EUROPEAN PATENT APPLICATION

(11) **EP 2 835 233 A1**
(43) Date of publication of application: **11.02.2015**
(21) Application number: 12873509.9
(22) Date of filing: 02.04.2012
(51) Int. Cl.: B25J 13/00, B25J 13/08

(54) **ROBOT SYSTEM AND WORK FACILITY**

(71) Applicant: Kabushiki Kaisha Yaskawa Denki, Kitakyushu-shi, Fukuoka 806-0004 (JP)
(72) Inventor: NAMBA, Taro, Kitakyushu-shi Fukuoka 806-0004 (JP); UENO, Tomohiro, Kitakyushu-shi Fukuoka 806-0004 (JP); YOSHIDA, Osamu, Kitakyushu-shi Fukuoka 806-0004 (JP)
(74) Representative: Viering, Jentschura & Partner Patent- und Rechtsanwälte
(86) International application number: PCT/JP2012/058982
(87) International publication number: WO 2013/150596

(57) **Abstract**

A robot system 1 comprises a plurality of work facilities 100 and a central image processor 200. Each of the work facilities 100 comprises a robot 110 configured to perform bolt tightening work, including a movement of screwing a bolt 2 into a bolt hole 3, a robot controller 120, and a camera 130. A central image processor 100 accepts image information generated by the camera 130 of each of the work facilities 100. Then, the accepted image information is subjected to image analysis based on a processing algorithm stored in an algorithm storage part 203a. Then, position information of the bolt 3 included in the accepted image information is transmitted to a robot controller 120 of the corresponding work facility 100. The robot controller 120 controls the movement of the robot 110 based on the position information of the bolt hole 3 transmitted from the central image processor 100.

## Description

### TECHNICAL FIELD

The present disclosure relates to a robot system and a work facility.

### BACKGROUND ART

Patent Document 1 discloses a picking system configured to control a robot comprising a robot hand, and performs picking work. This picking system includes the robot, a camera, an image processor, a controller, and the like as work facilities. The image processor uses image data of the work taken by a camera to find the position information of the work. The controller controls the robot and executes picking work using the position information of the work found by the image processor.

### Patent Documents

Patent Document 1: Japanese patent laid-open 2010-240785

### DISCLOSURE OF THE INVENTION

### Problems to be Solved by the Invention

According to the prior art, a camera serving as a sensor and an image processor serving as an information processor configured to analyse image data as the detection information of this camera are provided in the site where the work is performed by the robot, and the controller serving as the robot controller controls the movement of the robot based on the analytical information of the image data from the image processor. With this arrangement, it is possible to accurately and reliably perform work by a robot. Nevertheless, the problem arises that information processors are generally expensive, and teaching (programming) the processing contents requires relatively significant labour.

The present invention has been made in view of such problems, and it is therefore an object of the present invention to provide a robot system and a work facility capable of more favourably performing work by a robot using the detection information of a sensor.

### Means for Solving the Problems

In order to achieve the above-described object, according to one aspect of the present invention, there is provided a robot system, comprising one or more work facilities comprising a robot configured to perform predetermined work, a robot controller configured to control a movement of the robot, and a sensor correspondingly provided on the robot, and a central information processor data-communicably connected to each of the one or more work facilities, the central information processor including an information accepting part configured to accept detection information of the sensor of each work facility, an algorithm storage part configured to store a processing algorithm for the detection information in each work facility, an information analysing part configured to analyse the detection information accepted by the information accepting part based on the processing algorithm stored in the algorithm storage part, and an analytical information output part configured to output analytical information of the detection information analysed by the information analysing part to the robot controller of a corresponding the work facility, and the robot controller being configured to control the movement of the robot based on the analytical information output from the analytical information output part.

### Advantages of the Invention

According to the present invention, it is possible to more favourably perform work by a robot using the detection information of a sensor.

### BRIEF DESCRIPTION OF THE DRAWINGS

FIG. 1 is a system configuration diagram schematically showing the overall configuration of a robot system in an embodiment.
FIG. 2 is an explanatory view showing another example of the central image processor.
FIG. 3 is a schematic diagram schematically showing the configuration of a work facility of one site.
FIG. 4 is a function block diagram showing the functional configuration of the robot controller and the camera of one site, and the central image processor.
FIG. 5 is a sequence diagram showing the control procedure executed between the robot controller and the camera of one site, and the central image processor.

### BEST MODE FOR CARRYING OUT THE INVENTION

An embodiment will now be described with reference to accompanying drawings.

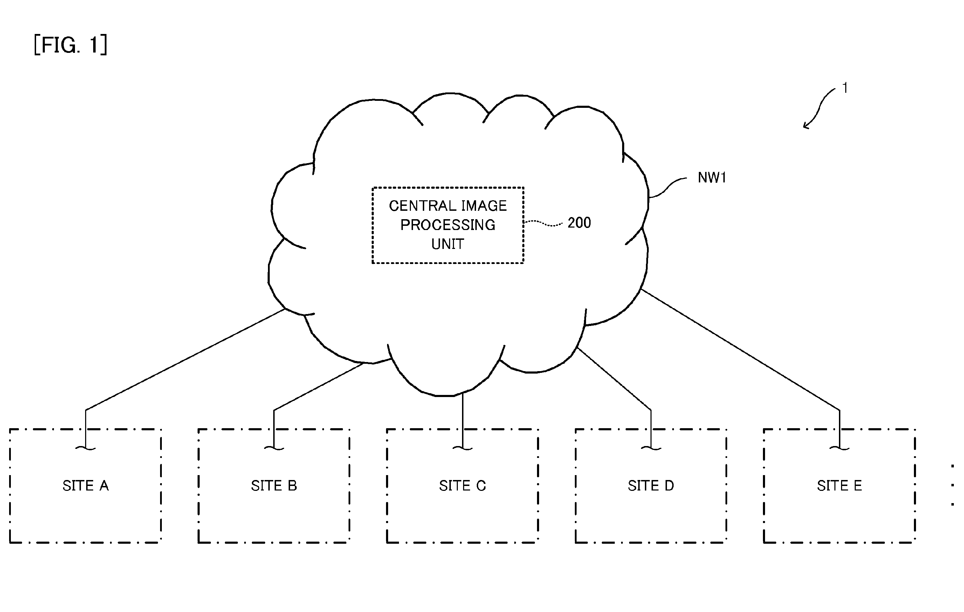

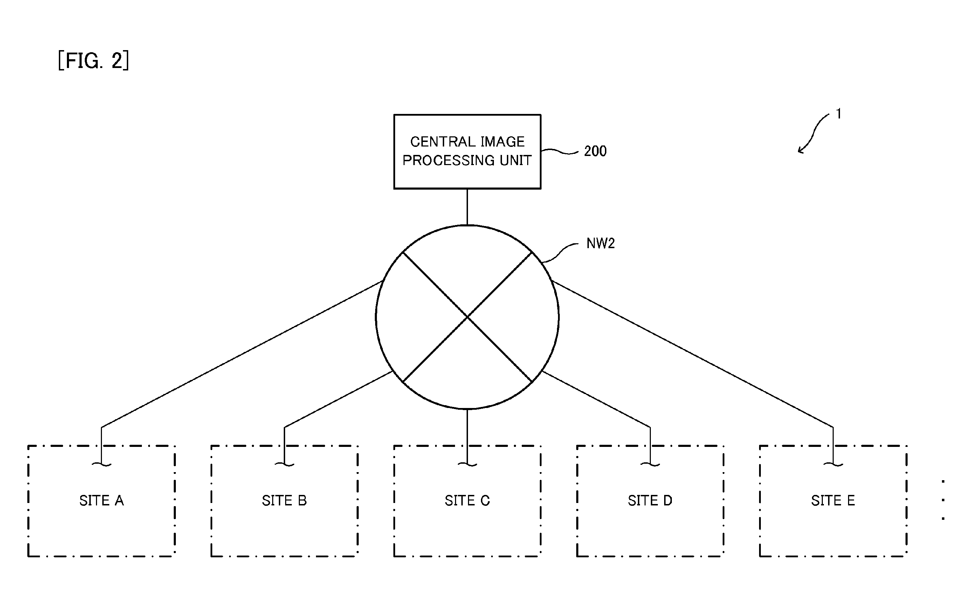

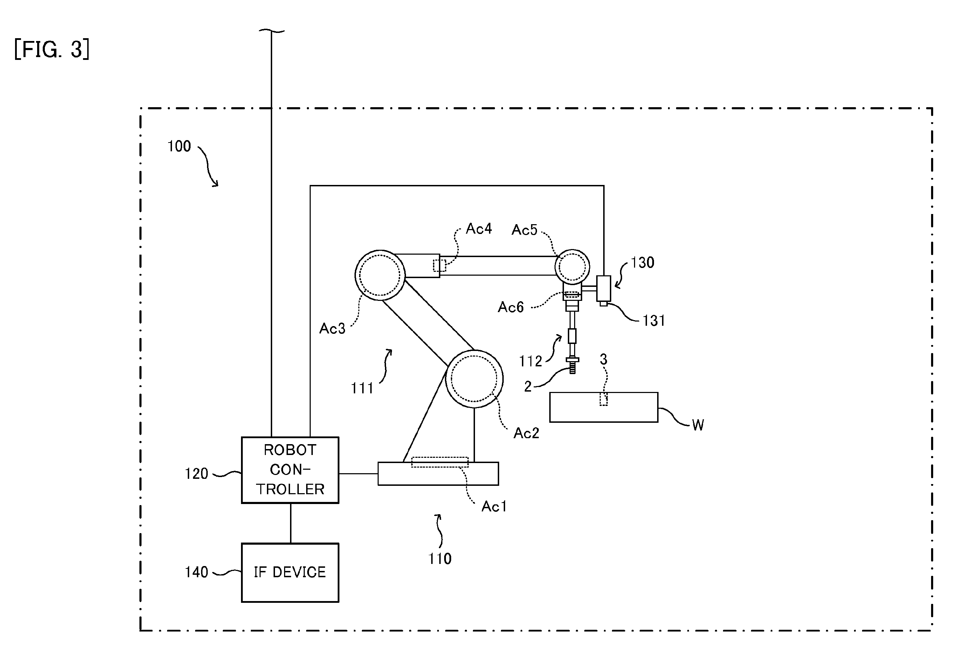

As shown in FIG. 1, a robot system 1 in this embodiment comprises a plurality of work facilities 100 (not shown in FIG. 1; refer to FIG. 3 described later) respectively disposed in a plurality of sites (described as "Site A" "Site B" "Site C" "Site D" "Site E"... in FIG. 1), such as plants and the like comprising production lines, for example, and a central image processor 200 (central information processor). The central image processor 200 is an image processor common to (shared by) the work facilities 100 of the plurality of sites. This central image processor 200 is configured as an aggregate of one or more computers and storage devices linked by a network cloud NW1 (network), and is data-communicably connected to each of the plurality of work facilities 100. Note that, as shown in FIG. 2, a single computer connected to the respective work facilities 100 via a suitable network NW2 may be used as the central image processor 200. In this case, the central image processor 200 is installed in an office building or the like of a proprietary company of the robot system 1, for example.

As shown in FIG. 3, a robot 110, a robot controller 120, a camera 130 (image sensor, sensor) comprising a lens 131, and an interface device 140 (hereinafter abbreviated "IF device 140") are disposed as the work facilities 100 in one site. Note that, while only one site is shown in FIG. 3, the same holds true for the other sites as well. The robot controllers 120 of each site and the above described central image processor 200 are data-communicably connected to each other via the above described network cloud NW1.

The robot 110 performs bolt tightening work, including a movement that screws a bolt 2 into a bolt hole 3 (work target) disposed on a work W fed by a conveyor (not shown) and disposed in a predetermined position, for example, as the predetermined work. This robot 110 comprises an arm 111 and actuators Ac1, Ac2, Ac3, Ac4, Ac5, Ac6, each constituting a servo motor for driving this arm 111. A tool 112 (such as an electric screw driver or nut runner, for example) for screwing the bolt 2 into the bolt hole 3 is attached to the tip end side of the arm 111.

The robot controller 120 is intercommunicably connected to the servo motors of the respective actuators Ac1-Ac6 disposed on the above described arm 111, and controls the driving of the respective servo motors. With this arrangement, the overall movement of the respective actuators Ac1-Ac6, that is, the movement of the robot 110, is controlled. Further, the robot controller 120 controls the movement of the above described tool 112 (such as the ON/OFF state of the electric screw driver, for example).

The camera 130 is fixed to the tip end side of the above described arm 111 via a suitable linking member. Note that the camera 130 may be disposed in a position other than this (such as above the feeding path of the work W, for example). This camera 130 takes an image of the above described bolt hole 3 via the lens 131, and generates image information including that for the image of the bolt hole 3 thus taken. The generated image information is output to the robot controller 120 as detection information and transmitted from a transmitting portion 122a of a communication control part 122 described later to the central image processor 200 via the above described network cloud NW1. Note that the camera 130 may directly transmit the image information to the central server 200.

The IF device 140 comprises a personal computer, a teaching pendant, and the like, and includes a display device that displays various information, an input device that accepts the input of various information by an operator, and the like (all not shown). The information (described later) to be transmitted to the central image processor 200 that has been input by the operator via the IF device 140 is output to the robot controller 120 and transmitted from the transmitting portion 122a of the communication control part 122 described later to the central image processor 200 via the above described network cloud NW1. Note that the IF device 140 may directly transmit the information to be transmitted to the above described central image processor 200 to the central image processor 200.

The central image processor 200 accepts the image information transmitted from the robot controller 120 of each site, performs image analysis on the accepted image information, and detects the position of the above described bolt hole 3 (details described later). The detected position information of the bolt hole 3 is transmitted (returned) to the robot controller 120 of the corresponding site via the above described network cloud NW1 as the image analytical information of the image information.

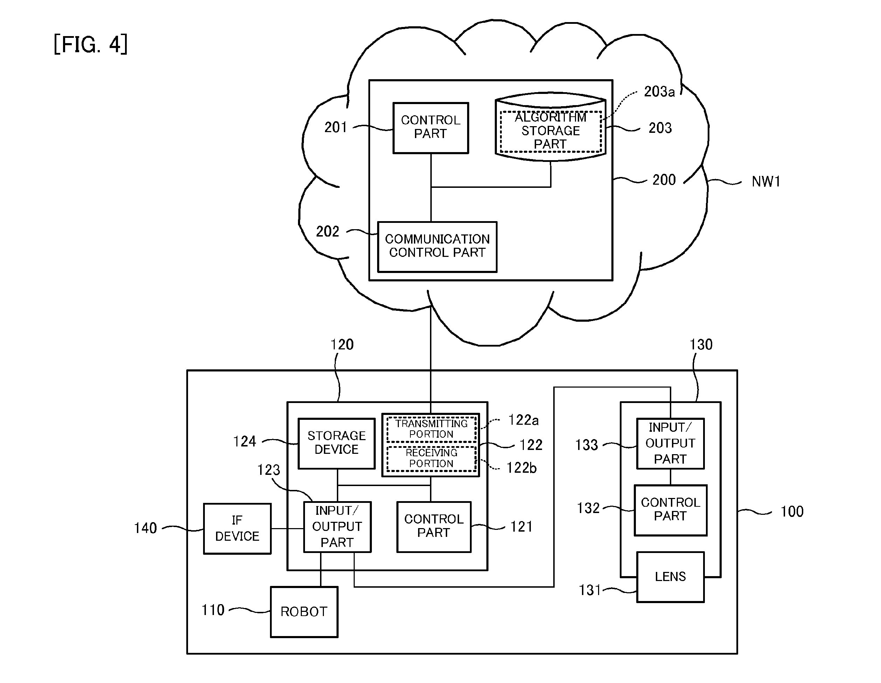

As shown in FIG. 4, the camera 130 of the work facilities 100 disposed in one site comprises the above described lens 131, a control part 132, and an input/output part 133 as a functional configuration.

The control part 132 controls the entire camera 130. For example, the control part 132 generates image information, including that for an image of the above described bolt hole 3 taken via the lens 131.

The input/output part 133 controls the information communication performed with the robot controller 120. For example, the input/output part 133 controls the information communication when image information generated by the control part 132 is output to the robot controller 120.

The robot controller 120 comprises a control part 121, the communication control part 122, the input/output part 123, and a storage device 124 as a functional configuration.

The control part 121 controls the entire robot controller 120.

The input/output part 123 controls the information communication performed with the robot 110, the camera 130, and the IF device 140. For example, the input/output part 123 controls the information communication when image information output by the camera 130 is input.

The communication control part 122 comprises the transmitting portion 122a (transmitter) and a receiving portion 122b (receiver), and controls the information communication performed with the central image processor 200 via the network cloud NW1. For example, the transmitting portion 122a controls the information communication when the image information from the camera 130 and the information (described later) from the IF device 140 to be transmitted to the central image processor 200, input by the input/output part 123, is transmitted to the central image processor 200 via the network cloud NW1. The receiving portion 122b controls the information communication when the position information of the above described bolt hole 3 transmitted from the central image processor 200 is received via the network cloud NW1.

The storage device 124 comprises an HDD (Hard Disk Drive) and the like, for example, and stores various information and the like. For example, the storage device 124 stores teaching information, including the movement information and the like of the robot 110 related to the actual bolt tightening work instructed by an instructor operating the IF device 140 and moving the robot 110 in advance.

The central image processor 200 comprises a control part 201, a communication control part 202 (information accepting part, analytical information output part), and a large-capacity storage device 203 as a functional configuration.

The control part 201 controls the entire central image processor 200. For example, the control part 201 comprises a configuration serving as an information analyzing part that performs image analysis on the image information received by the communication control part 202 and detects the position of the above described bolt hole 3 as described later.

The communication control part 202 is configured to control the information communication performed with the robot controllers 120 of each site via the network cloud NW1. This communication control part 202 comprises a configuration serving as an information accepting part that accepts (receives) the image information transmitted from the robot controllers 120 of each site, and a configuration serving as an analytical information output part that transmits (outputs) the position information of the above described bolt hole 3 detected by the control part 201 to the robot controller 120 of the corresponding site.

The large-capacity storage device 203 is configured as an aggregate of a plurality of storage media that exist inside the network cloud NW1, and is capable of variably setting the storage capacity and the like. This large-capacity storage device 203 comprises an algorithm storage part 203a. The algorithm storage part 203a stores a plurality of types of processing algorithms associated with a shape pattern of a detected target object.

The processing algorithms include a type that cuts out circular regions from the image information received by the communication control part 202 and outputs the position information of the respective regions cut out (suitable in a case where a target with a circular hole is to be detected), and a type that detects a length of a long axis and a position posture of each object from the image information (suitable in a case where a long, narrow target, such as a bolt, is to be detected). Further, the processing algorithms also include a type that simply translates image information into binary values following conditions, a type that just divides the region based on the image information, as well as a type that configures one processing algorithm from a combination of a plurality of processing algorithms.

According to this embodiment, the control part 201 comprises a configuration that serves as an algorithm configuring part. That is, the control part 201 is configured to select the processing algorithm to be used in image processing from the plurality of types of processing algorithms stored in the algorithm storage part 203a in accordance with the information from the IF device 140 that was transmitted from each site and is to be transmitted to the central image processor 200, more specifically, the information that provides instructions regarding the processing algorithm of image processing (hereinafter suitably referred to as "instruction information"), and sets the parameters and the like to be used in the processing algorithm. In particular, according to this embodiment, the control part 201 constitutes a processing algorithm that detects the position of the above described bolt hole 3 in response to the image information from the sites. Note that, in a case where the same processing is performed in each site, the processing algorithm configured by the control part 201 is used as a common processing algorithm (hereinafter suitably referred to as "common image processing algorithm") for the image information from each site.

Note that while the above has described the work facilities 100 of one site, similarly at least the robot 110, the robot controller 120, the camera 130, and the IF device 140 (each may be a type constituting a structure and configuration that differs from that of the above described site) are disposed as the work facilities 100 in the other sites as well.

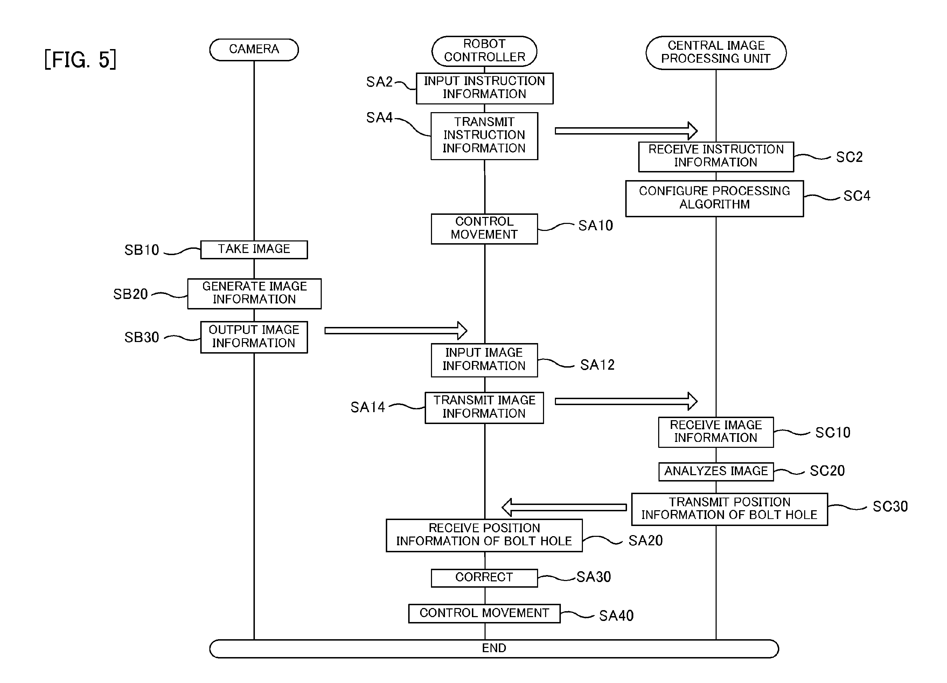

The following describes the control procedure executed between the robot controller 120 and the camera 130 of one site, and the central image processor 200, using FIG. 5. Note that FIG. 5 basically shows the respective procedures according to changes in time series, from the top to the bottom in the figure.

As shown in FIG. 5, when the operator operates the IF device 140 and inputs the above described instruction information, first, in step SA2, the control part 121 of the robot controller 120 inputs the instruction information from the IF device 140 by the input/output part 123.

Subsequently, in step SA4, the control part 121 of the robot controller 120 transmits the instruction information input in the above described step SA2 from the transmitting portion 122a to the central image processor 200 via the network cloud NW1.

With this arrangement, in step SC2, the control part 201 of the central image processor 200 receives the instruction information transmitted from the transmitting portion 122a of the robot controller 120 in the above described step SA4 by the communication control part 202.

Then, the flow proceeds to step SC4 where the control part 201 of the central image processor 200 selects the processing algorithm to be used in image processing from the plurality of types of processing algorithms stored in the algorithm storage part 203a in accordance with the instruction information received in the above described step SC2, and configures the above described common image processing algorithm. The procedure of this step SC4 functions as an algorithm configuring part.

Then, in step SA10, the control part 121 of the robot controller 120 causes the robot 110 to execute the movement instructed in advance by playback control based on the teaching information stored in the storage device 124. With this arrangement, the robot 110 assumes a pre-instructed posture (a posture that permits the camera 130 on the tip end side of the arm 112 to take an image of the bolt hole 3 of the work W disposed in a predetermined position).

Then, when the work W is disposed in the predetermined position, in step SB10, the control part 132 of the camera 130 takes an image of the bolt hole 3 of the work W via the lens 131.

Subsequently, in step SB20, the control part 132 of the camera 130 generates image information, including an image of the bolt hole 3 taken in the above described step SB 10.

Then, the flow proceeds to step SB30 where the control part 132 of the camera 130 outputs the image information generated in the above described step SB20 to the robot controller 120 by the input/output part 133.

With this arrangement, in step SA12, the control part 121 of the robot controller 120 inputs the image information output from the camera 130 in the above described step SB30 by the input/output part 123.

Subsequently, in step SA14, the control part 121 of the robot controller 120 transmits the image information input in the above described step SA12 from the transmitting portion 122a to the central image processor 200 via the network cloud NW1.

With this arrangement, in step SC10, the control part 201 of the central image processor 200 receives the image information transmitted from the transmitting portion 122a of the robot controller 120 in the above described step SA14 by the communication control part 202.

Subsequently, in step SC20, the control part 201 of the central image processor 200 performs image analysis on the image information received in the above described step SC10 and detects the position of the bolt hole 3 based on the common image processing algorithm configured in the above described step SC4. Detection of the position of the bolt hole 3 is performed by suitable known pattern matching (normalized correlation) processing using a registered model (image pattern of the bolt hole 3) registered in the large-capacity storage device 203 during teaching, for example. The procedure of this step SC20 functions as an information analysing part.

Then, the flow proceeds to step SC30 where the control part 201 of the central image processor 200 transmits the position information of the bolt hole 3 detected in the above described step SC20 to the robot controller 120 of the corresponding site via the network cloud NW1 by the communication control part 202.

With this arrangement, in step SA20, the control part 121 of the robot controller 120 receives the position information of the bolt hole 3 transmitted from the communication control part 202 of the central image processor 200 in the above described step SC30 by the receiving portion 122b.

Subsequently, in step SA30, the control part 121 of the robot controller 120 calculates the amount of displacement between the actual position of the bolt hole 3 and a reference position (position of the bolt 3 during teaching) based on the position information of the bolt hole 3 received in the above described step SA20. Then, a position correction amount for compensating for the amount of displacement is calculated. Then, based on the position correction amount, the position where the robot 110 performs the movement of screwing the bolt 2 using the tool 112 is corrected to the actual position of the bolt hole 3 in the teaching information stored in the storage device 124.

Subsequently, in step SA40, the control part 121 of the robot controller 120 causes the robot 110 to execute the bolt tightening work, which includes the movement of screwing the bolt 2 into the bolt hole 3 using the tool 112, by control based on the teaching information corrected in the above described step SA30. With this arrangement, the sequence shown in FIG. 5 ends.

In the robot system 1 in this embodiment described above, rather than providing an image processor that performs image analysis on the image information generated by the camera 130 and outputs the position information of the bolt hole 3 to the robot controller 120 in each of a plurality of sites, the central image processor 200 which serves as an image processor common to the work facilities 100 of the plurality of sites is disposed. With this arrangement, it is possible to eliminate the labour of installing a high-performance computer in each site as well as setting processing algorithms for image processing in each site. As a result, according to this embodiment, it is possible to more favourably perform the bolt tightening work by the robot 110 using the image information generated by the camera 130. Further, executing the processing algorithm that is common to a plurality of sites increases the operation frequency of the processing algorithm, making it possible to expect encouragement to improve the processing algorithm based on the operation results of each site.

Note that the embodiments are not limited to the above, and various modifications may be made without deviating from the spirit and scope of the invention. For example, while the above described embodiment has described an illustrative scenario in which the bolt tightening work is performed by the robot 110, the present invention is not limited thereto, allowing application to cases where work handling, work painting, work welding, and the like are performed by a robot. In such a case, the above described work handling, work painting, work welding, and the like link to the predetermined work.

Further, in addition to the above, the present invention may be applied to a case where communication (such as reception of a visitor at a company office building, site, or the like, or real or virtual world services, for example), including dialog with a person by a robot with a microphone as a sensor, is performed. In such a case, the above described communication which includes dialog with the person links to the predetermined work.

Further, while the camera 130, microphone, and the like are disposed as a part of the work facilities of the sites in the above, the present invention is not limited thereto, allowing provision of other sensors (such as a tactile sensor, for example).

Further, the sequence shown in the aforementioned FIG. 5 is not limited to the procedures shown in the embodiments, allowing procedures to be added, deleted, and changed in order without deviating from the spirit and scope of the invention.

Further, other than that already stated above, techniques based on the above described embodiment may be suitably utilized in combination as well.

Although other examples are not individually described herein, various changes can be made according to the above described embodiments and the like without deviating from the spirit and scope of the invention.

### Explanation of Reference Numerals

- 1: Robot system
- 100: Work facility
- 110: Robot
- 120: Robot controller
- 121: Control part
- 122a: Transmitting portion (Transmitter)
- 122b: Receiving portion (Receiver)
- 130: Camera (Image sensor, Sensor)
- 132: Control part
- 140: IF device (Interface device)
- 200: Central image processor (Central information processor)
- 201: Control part
- 202: Communication control part (Information accepting part, Analytical information output part)
- 203a: Algorithm storage part
- NW1: Network cloud (Network)

## Claims

1. A robot system comprising
one or more work facilities comprising a robot configured to perform predetermined work, a robot controller configured to control a movement of the robot, and a sensor correspondingly provided on the robot; and
a central information processor data-communicably connected to each of the one or more work facilities;
the central information processor including
an information accepting part configured to accept detection information of the sensor of each work facility;
an algorithm storage part configured to store a processing algorithm for the detection information in each work facility;
an information analysing part configured to analyse the detection information accepted by the information accepting part based on the processing algorithm stored in the algorithm storage part; and
an analytical information output part configured to output analytical information of the detection information analysed by the information analysing part to the robot controller of a corresponding the work facility; and
the robot controller being configured to control the movement of the robot based on the analytical information output from the analytical information output part.

2. The robot system according to claim 1, wherein
the sensor is an image sensor configured to generate image information of a work target of the robot as the detection information;
the information accepting part of the central information processor accepts the image information generated by the image sensor of each work facility;
the algorithm storage part stores a processing algorithm for the image information in each work facility;
the information analysing part performs image analysis on the image information accepted by the information accepting part based on the processing algorithm stored in the algorithm storage part;
the analytical information output part outputs image analytical information of the image information analysed by the information analysing part to the robot controller of a corresponding the work facility; and
the robot controller controls the movement of the robot based on the image analytical information output from the analytical information output part.

3. The robot system according to claim 1 or 2, wherein
the central information processor is configured as an aggregate of one or more computers and storage devices linked by a network.

4. The robot system according to any one of claims 1 to 3, wherein
the work facility comprises an interface device for inputting information into the central information processor;
the central information processor comprises an algorithm configuring part configured to configure the processing algorithm to be executed in the information analysing part from the processing algorithms stored in the algorithm storage part, in accordance with the information from the interface device; and
the information analysing part analyses the detection information based on the processing algorithm configured by the algorithm configuring part.

5. A work facility used in the robot system according to any one of claims 1 to 4, comprising a robot configured to perform predetermined work, a robot controller configured to control the movement of the robot, and a sensor correspondingly provided on the robot, further comprising
a transmitter configured to transmit detection information of the sensor to the central information processor configured to analyse the detection information via a network; and
a receiver configured to receive analytical information of the detection information transmitted from the central information processor via a network;
the robot controller being configured to control the movement of the robot based on the analytical information received by the receiver.
